# EUROPÄISCHE PATENTSCHRIFT

(11) **EP 0 999 945 B1**
(45) Veröffentlichungstag und Bekanntmachung des Hinweises auf die Patenterteilung: **05.09.2001**
(21) Anmeldenummer: 97910278.7
(22) Anmeldetag: 31.07.1997
(51) Int. Cl.: B60H 1/00, F28D 20/02, F01P 5/10

(54) **LATENTWÄRMESPEICHER FÜR EIN KRAFTFAHRZEUG**
LATENT HEAT STORAGE SYSTEM FOR USE IN A VEHICLE
REGULATEUR THERMIQUE A CHANGEMENT D'ETAT POUR AUTOMOBILE

(43) Veröffentlichungstag der Anmeldung: 17.05.2000
(73) Patentinhaber: WILO GmbH, D-44263 Dortmund (DE)
(72) Erfinder: GENSTER, Albert, D-45768 Marl (DE); KECH, Hansjürgen, D-58313 Herdecke (DE); SCHMALFUSS, Horst-Georg, D-58540 Meinerzhagen (DE); HUNNEKUHL, Gerhard, D-58452 Witten (DE)
(74) Vertreter: COHAUSZ HANNIG DAWIDOWICZ & PARTNER
(86) Internationale Anmeldenummer: EP9704646
(87) Internationale Veröffentlichungsnummer: WO9906234

(56) Entgegenhaltungen:
- EP-A- 0 276 739
- DE-A- 3 720 319
- US-A- 1 672 119
- US-A- 4 371 028
- PATENT ABSTRACTS OF JAPAN vol. 017, no. 053 (M-1361), 3.Februar 1993 & JP 04 263787 A (KOBE STEEL LTD), 18.September 1992,
- PATENT ABSTRACTS OF JAPAN vol. 008, no. 035 (M-276), 15.Februar 1984 & JP 58 190648 A (HIROSHI TAKI), 7.November 1983,

## Beschreibung

Es ist bekannt, im Kühlmittelkreislauf eines Kraftfahrzeug-Verbrennungsmotors einen Kühler, eine Heizung/Klimaanlage und einen Latentwärmespeicher anzuordnen. Das Kühlmittel wird durch eine Pumpe umgetrieben und im Motorraum des Kraftfahrzeugs bilden Motor, Kühler, Heizung und Latentwärmespeicher sowie die Pumpe des Kühlmittel- kreislaufs getrennte Einheiten, die im Motorraum nacheinander montiert werden.

Die DE-A-3 720 319 zeigt einen Latentwärmespeicher gemäß dem Oberbegriff des Anspruchs 1.

Aufgabe der Erfindung ist es, Herstellung, Montage und Reparatur, insbesondere auch Austausch der Aggregate eines Kühlmittelkreislaufes zu vereinfachen und preiswerter zu gestalten, wobei auch der Platzbedarf verringert werden soll.

Diese Aufgabe wird erfindungsgemäß dadurch gelöst, daß im oder am Geäuse des Latentwärmespeichers eine Motorkreiselpumpe befestigt ist.

Hierdurch bildet der Latentwärmespeicher mit der das Kühlmittel umwälzenden Motorpumpe eine bauliche Einheit, die Herstellung und Montage wesentlich vereinfacht. Ferner werden Reparaturen erleichtert und es wird weniger Platz im Motorraum benötigt.

Besonders vorteilhaft ist es, wenn die Pumpe an einer Stirnseite des Latentwärmespeichers koaxial befestigt ist. Auch ist konstruktiv und für das Einsparen von Platz von Vorteil, wenn das Pumpengehäuse auf der dem Motor abgewandten Seite eine ebene Anschlußfläche mit Ein- und Auslaß aufweist, mit der die Pumpe an dem Latentwärmespeicher oder einem Zwischenaggregat befestigt ist. Hierbei kann zwischen Anschlußfläche und Pumpe und/oder Latentwärmespeicher eine Scheibe als Zwischenaggregat befestigt sein, die eine hydraulische Verteilung und/oder ein Ventil (insbesondere ein Dreiwege-Ventil) aufweist.

Ein besonders günstiger Einsatz einer Pumpe ist dann gegeben, wenn die Pumpe eine Rohrpumpe ist, deren Laufrad koaxial durchflossen ist. Auch kann cer E-Motor der Pumpe einen Magnetläufer aufweisen, wodurch die Pumpe sehr wenig Platz benötigt und scheibenformig an das benachbarte Aggregat befestigbar ist.

Eine weitere Intearation und Verringerung des Platzbedarfs wird erreicht, wenn auf einer Stirnseite der Pumpe und/oder des Latentwärmespeichers ein Gehäuse befestigt ist, das elektronische Bauteile zur Regelung aufweist.

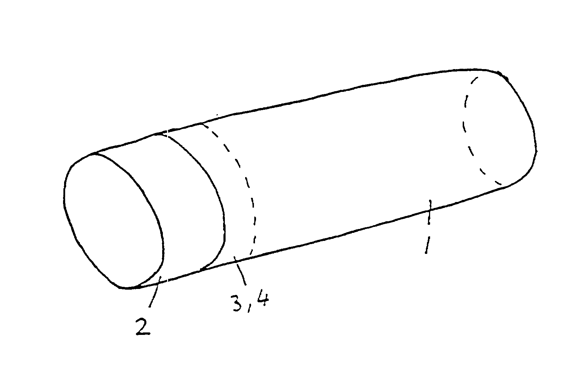

Ein Ausführungsbeispiel der Erfindung ist in der Zeichnung in einer Perspektive dargestellt und wird im folgenden näher beschrieben.

An einem in einem Kühlwasserkreislauf eines Kraftfahrzeugverbrennungsmotors angeschlossenen, insbesondere zylindrischen Latentwärmesepicher 1 ist direkt oder über ein Zwischenaggregat eine Motorpumpe, insbesondere eine Spaltrohrpumpe 2 stirnseitig befestigt. Das Zwischenaggregat kann eine elektronische oder hydraulische Einrichtung 3,4 sein. Hierbei bilden Latentwärmespeicher 1, Motorpumpe 2 und das potentielle Zwischenaggregat 3,4 eine bauliche Einheit, die innerhalb der baulichen Einheit aneinander derart angeschlossen sind, daß sie vom Kühlmittel durchflossen sind.

Die Motorpumpe 2 ist entweder eine Rohrpumpe oder eine Spaltrchrpumpe, deren Pumpengehäuse auf der dem Elektromotor abgewandten Seite eine ebene Anschlußfläche mit Ein- und Auslaß aufweist. Mit dieser flachen Anschlußseite ist die Pumpe an dem Latentwärmespeicher 1 direkt oder indirekt befestigt.

Zwischen der Motorpumpe 2 und dem Latentwärmespeicher 1 kann eine scheibenförmige hydraulische Verteilung 4 und/oder ein Ventil, insbesondere ein Dreiwegeventil, befestigt sein, das insbesondere durch eine elektronische Einrichtung 3 gesteuert wird. Die Einrichtung 3 befindet sich innerhalb eines Gehäuses, das die elektronischen Bauteile zur Regelung der Pumpe 2, und/oder des Latentwärmespeichers 1 aufweist und an der Stirnseite der Motorpumpe und/oder des Latentwärmespeichers befestigt ist.

In weiteren Alternativen kann der Motor der Motorpumpe 2 einen Magnetläufer aufweisen, wodurch die Motorpumpe eine besonders geringe axiale Länge besitzt. Ferner kann das Aggregat 3,4 an der Stirnseite des Latentwärmespeichers 1 befestigt sein, die der Pumpe 2 gegenüberliegt. Auch kann die Pumpe 2 eine Rohrpumpe sein.

## Patentansprüche

1. Latentwärmespeicher für den Kühlwasserkreislauf eines Kraftfahrzeug-Verbrennungsmotors, **dadurch gekennzeichnet,** daß im oder am Gehäuse des Latentwärmespeichers (1) eine Motorkreiselpumpe (2) befestigt ist.

2. Latentwärmespeicher nach Anspruch 1, **dadurch gekennzeichnet,** daß Latentwärmespeicher (1) und Pumpe (2) eine bauliche Einheit bilden.

3. Latentwärmespeicher nach Anspruch 1 oder 2, **dadurch gekennzeichnet,** daß die Pumpe (2) an einer Stirnseite des Latentwärmespeichers (1) koaxial befestigt ist.

4. Latentwärmespeicher nach einem der vorhergehenden Ansprüche, **dadurch gekennzeichnet,** daß das Pumpengehäuse auf der dem Motor abgewandten Seite eine ebene Anschlußfläche mit Ein- und Auslaß aufweist, mit der die Pumpe (2) an dem Latentwärmespeicher (1) oder einem Zwischenaggregat (3,4) befestigt ist.

5. Latentwärmespeicher nach Anspruch 4, **dadurch gekennzeichnet,** daß zwischen Anschlußfläche und Pumpe (2) und/oder Latentwärmespeicher (1) eine Scheibe als Zwischenaggregat befestigt ist, die eine hydraulische Verteilung und/oder ein Ventil (insbesondere ein Dreiwege-Ventil) aufweist.

6. Latentwärmespeicher nach einem der vorhergehenden Ansprüche, **dadurch gekennzeichnet,** daß die Motorpumpe (2) eine Spaltrohrpumpe ist.

7. Latentwärmespeicher nach einem der Ansprüche 1 bis 5, **dadurch gekennzeichnet, daß** die Pumpe (2) eine Rohrpumpe ist, deren Laufrad koaxial durchflossen ist.

8. Latentwärmespeicher nach einem der vorhergehenden Ansprüche, **dadurch gekennzeich**n e t, daß der Motor der Pumpe (2) einen Magnetläufer aufweist.

9. Latentwärmespeicher nach einen der vorhergehenden Ansprüche, **dadurch gekennzeichnet,** daß auf einer Stirnseite der Pumpe (2) und/oder des Latentwärmespeichers (1) ein Gehäuse des Zwischenaggregats befestigt ist, das elektronische Bauteile zur Regelung aufweist.

## Claims

1. A latent heat accumulator for the cooling water circuit of a motor vehicle internal combustion engine,
**characterised in that** a motor-driven centrifugal pump (2) is attached in or on the casing of the latent heat accumulator (1).

2. A latent heat accumulator according to claim 1,
**characterised in that** the latent heat accumulator (1) and the pump (2) form a structural unit.

3. A latent heat accumulator according to claims 1 or 2,
**characterised in that** the pump (2) is attached coaxially to an end face of the latent heat accumulator (1).

4. A latent heat accumulator according to one of the preceding claims,
**characterised in that** on the side remote from the engine the pump casing has a flat connecting surface with inlet and outlet, the pump (2) being attached via said surface to the latent heat accumulator (1) or an intermediate unit (3, 4).

5. A latent heat accumulator according to claim 4,
**characterised in that** attached as an intermediate unit between the connecting surface and the pump (2) and/or the latent heat accumulator (1) is a disc which has a hydraulic distribution and/or a valve (more particularly a three-way valve).

6. A latent heat accumulator according to one of the preceding claims,
**characterised in that** the motor-driven pump (2) is a canned pump.

7. A latent heat accumulator according to one of the preceding claims,
**characterised in that** the pump (2) is a tubular pump whose impeller is flowed through coaxially.

8. A latent heat accumulator according to one of the preceding claims,
**characterised in that** the motor of the pump (2) has a magnetic rotor.

9. A latent heat accumulator according to one of the preceding claims,
**characterised in that** attached on one end face of the pump (2) and/or the latent heat accumulator (1) is an intermediate unit casing having electronic components for control purposes.

## Revendications

1. Régulateur thermique à changement d'état pour le circuit d'eau de refroidissement d'un moteur à combustion pour véhicule automobile,
**caractérisé en ce qu**'une motopompe centrifuge (2) est fixée dans ou au boîtier du régulateur thermique à chargement d'état (1).

2. Régulateur thermique à changement d'état selon la revendication 1,
**caractérisé en ce que** le régulateur thermique à changement d'état (1) et la pompe (2) forment une unité de construction.

3. Régulateur thermique à changement d'état selon la revendication 1 ou 2,
**caractérisé en ce que** la pompe (2) est fixée coaxialement sur une face frontale du régulateur thermique à changement d'état (1).

4. Régulateur thermique à changement d'état selon l'une des revendications précédentes,
**caractérisé en ce que** le carter de pompe présente, sur la face écartée du moteur, une surface de raccordement plane avec entrée et sortie par laquelle la pompe (2) est fixée au régulateur thermique à changement d'état (1) ou à une unité intermédiaire (3, 4).

5. Régulateur thermique à changement d'état selon la revendication 4,
**caractérisé en ce qu**'un disque est fixé en tant qu'unité intermédiaire entre surface de raccordement et pompe (2) et/ou régulateur thermique à changement d'état (1) et présente une distribution hydraulique et/ou une vanne (en particulier une vanne trois voies).

6. Régulateur thermique à changement d'état selon l'une des revendications précédentes,
**caractérisé en ce que** la motopompe (2) est une pompe à moteur'à gaine.

7. Régulateur thermique à changement d'état selon l'une des revendications 1 à 5,
**caractérisé en ce que** la pompe (2) est une pompe à tube dont le rotor est traversé coaxialement.

8. Régulateur thermique à changement d'état selon l'une des revendications précédentes,
**caractérisé en ce que** le moteur de la pompe (2) présente un induit magnétique.

9. Régulateur thermique à changement d'état selon l'une des revendications précédentes,
**caractérisé en ce qu**'un boîtier de l'unité intermédiaire, qui présente des composants électroniques de commande, est fixé sur une face frontale de la pompe (2) et/ou du régulateur thermique à changement d'état (1).
